# EUROPEAN PATENT APPLICATION

(11) **EP 2 341 594 A1**
(43) Date of publication of application: **06.07.2011**
(21) Application number: 09016071.4
(22) Date of filing: 29.12.2009
(51) Int. Cl.: H02J 1/10, H02J 3/36, H02J 3/38

(54) **Power collection and transmission systems**

(71) Applicant: Converteam Technology Ltd, Rugby Warwickshire CV21 1BU (GB)
(72) Inventor: Zhan, Changjiang, Warwickshire CV21 3UH (GB); Bullock, Andrew James, Leicestershire LE9 4TB (GB); Smith, Christopher, Leicester LE3 3QX (GB); Crane, Allan David, Gwynedd LL41 4TS (GB)
(74) Representative: Serjeants

(57) **Abstract**

A power collection and transmission system can be used with a plurality of energy devices such as off-shore wind turbines (2), for example. The energy devices are grouped into two or more clusters. The system includes a dc collection network (N1, N2...N14) for each cluster, the dc collection network being provided by a suitable busbar or cable. A primary DC/DC converter (8) is located at each energy device and is connected to the dc collection network. First and second dc transmission lines (20 and 22) are used to transmit any power generated by the energy devices to an onshore converter station. A secondary DC/DC converter (12) is connected between the dc collection networks and the first and second dc transmission lines (20, 22). The secondary DC/DC converter (12) includes a series of interconnected DC/DC converter modules (14) that in one arrangement are co-located at a converter station (10). Each DC/DC converter module (14) has first and second dc terminals (16a, 16b) connected to the dc lines of a respective one of the dc collection networks and third and fourth dc terminal (18a and 18b) that are connected to either one of the first and second dc transmission lines (20 and 22) or to an adjacent DC/DC converter module in the series.

## Description

### Technical Field

The present invention relates to power collection and transmissions systems, and in particular to power collection and transmission systems for use with energy devices such as wind turbines, subsea turbines, and other renewal energy devices that extract energy from waves or tidal flows, for example.

### Background Art

It is possible to convert wind energy to electrical energy by using a wind turbine to drive the rotor of a generator. A plurality of wind turbines can be connected together in clusters to form a wind turbine farm.

There is a growing tendency for wind turbine farms to be located offshore because of environmental issues and concerns. In this situation, the power generated by the wind turbines must be transmitted to shore and this is typically achieved using subsea cables. Such subsea cables may make use of high-voltage direct current (HVDC) power transmission.

### Summary of the invention

The present invention provides a power collection and transmission system for a plurality of energy devices (e.g. wind turbines) grouped into two or more clusters, the power connection and transmission system comprising: a dc collection network for each cluster; a primary DC/DC converter located at each energy device and connected to a dc collection network; first and second dc transmission lines; and at least one secondary DC/DC converter connected between the dc collection networks and the first and second dc transmission lines.

The secondary DC/DC converter preferably includes a series of interconnected DC/DC converter modules. The DC/DC converter modules are not necessarily co-located at a single platform and any interconnected DC/DC converter modules (even those at physically separated locations) can collectively define a secondary DC/DC converter module that is located between the dc collection networks and the dc transmission lines of the collection and transmission system.

Each DC/DC converter module can have first and second dc terminals connected to dc lines of a respective one of the dc collection networks, optionally by means of a common dc distribution busbar or switching network. The common dc distribution busbar or switching network preferably includes switches between each dc collection network and its associated DC/DC converter module and switches to isolate the dc collection networks from each other, wherein the common dc distribution busbar or switching network can be configured to provide at least one of the following modes of operation: (a) allowing point to point power flow between any or all of the dc collection networks and the DC/DC converter modules whilst the dc collection networks are isolated from each other; (b) allowing power flow from at least one dc collection network to at least one DC/DC converter module; (c) allowing power flow between a plurality of dc collection networks and a plurality of DC/DC converter modules while at least one dc collection network is isolated; (d) allowing power flow between a plurality of dc collection networks and a plurality of DC/DC converter modules while at least one DC/DC converter module is isolated; and (e) allowing power flow between the dc collection networks and their associated DC/DC converter modules to be electrically connected as a single island or a plurality of galvanically isolated islands.

In an alternative arrangement each dc collection network is connected to a separate secondary DC/DC converter, the secondary DC/DC converters typically being connected in parallel to the first and second transmission lines. Each secondary DC/DC converter will preferably include a series of interconnected DC/DC converter modules. The secondary DC/DC converters can be co-located at a single platform or distributed through the energy device farm (e.g. located at an associated cluster).

The power collection and transmission system is particularly suitable for offshore energy devices but is also applicable to onshore or land-based energy devices.

Each cluster will include any convenient number of energy devices depending on the particular operating requirements. In particular, each cluster may have any suitable power rating. An energy device farm will include any convenient number of energy devices arranged in any convenient number of clusters. The clusters are preferably connected to the secondary DC/DC converter in parallel, each dc collection network being connected to a respective one of the series of interconnected DC/DC converter modules or the common dc distribution busbar or switching network, optionally by means of dc switches or circuit breakers, or in an alternative arrangement to a respective one of a plurality of secondary DC/DC converters.

The dc collection network for each cluster may carry a suitable collection voltage (typically, but not exclusively, a high voltage (HV) or medium voltage (MV) collection voltage) from the energy devices in that cluster to the associated DC/DC converter module or secondary DC/DC converter. Each dc collection network may be in the form of a suitable busbar or cable, for example, having at least a pair of dc lines. In the case where each dc collection network has first and second dc lines (e.g. a first dc line that carries a positive or negative collection voltage and a second dc line that carries a voltage that is close to zero) then these may be provided by one two-core MVDC cable or two single-core MVDC cables. Similarly, in the case where each dc collection network has first, second and third dc lines (e.g. a first dc line that carries a positive collection voltage, a second dc line that carries a negative collection voltages and a third dc line that carries a voltage close to zero) then these may be provided by one three-core MVDC cable or three single-core MVDC cables. The primary DC/DC converters for the energy devices of each particular cluster are preferably connected to the associated dc collection network in parallel. Each dc collection network therefore collects the power that is generated by the energy devices in the particular cluster and supplies that power to the associated DC/DC converter module or secondary DC/DC converter for onward transmission to an external supply network or power grid by means of the first and second dc transmission lines.

Each primary DC/DC converter is located at an energy device. In other words, the primary DC/DC converters are not co-located at a single platform but are distributed through the energy device farm. If the energy devices are wind turbines then the primary DC/DC converters might be positioned within the tower that supports the wind turbine nacelle. The primary DC/DC converters preferably operate as step-up converters and can be configured to supply power from the energy devices to the associated dc collection network at any suitable voltage level.

The primary DC/DC converters may have any suitable construction or topology such as a transformerless type or an isolation type with a transformer, for example.

In an arrangement where the dc collection networks have two dc lines then each primary DC/DC converter will typically have an asymmetric topology and provide only a positive or negative dc output to its first dc output terminal, its second dc output terminal having a voltage close to zero. The two dc output terminals of each primary DC/DC converter will be connected in parallel to the dc lines of the associated dc collection network. Alternatively, a primary DC/DC converter with a symmetric topology may be used. In this case each primary DC/DC converter will provide a positive dc output to its first dc output terminal and a negative dc output to its second dc output terminal, the mid point of the bipole output having a voltage close to zero. The two dc output terminals of each primary DC/DC converter will be connected in parallel to the dc lines of the associated dc collection network. The selection of asymmetric or symmetric topologies depends on the grounding and ground fault protection strategy to be adopted.

In an arrangement where the dc collection networks have three dc lines then each primary DC/DC converter may have an asymmetric or a symmetric topology depending on the grounding and ground fault protection strategy to be adopted. A primary DC/DC converter having an asymmetric topology will only provide a positive or negative dc output. This means that a proportion of primary DC/DC converters in each cluster will be configured to provide a positive dc output and a proportion of primary DC/DC converters in each cluster will be configured to provide a negative dc output. The two dc output terminals of the primary DC/DC converters that provide a positive dc output will be connected in parallel to a first dc line that carries a positive collection voltage and a third dc line that carries a voltage close to zero. The two dc output terminals of the primary DC/DC converters that provide a negative dc output will be connected in parallel to a second dc line that carries a negative collection voltage and the third dc line that carries a voltage close to zero. A primary DC/DC converter having a symmetric topology will provide a positive and a negative dc output. The three dc output terminals of the primary DC/DC converters in each cluster are connected in parallel to the first, second and third dc lines.

The first and second dc transmission lines carry a suitable transmission voltage (typically, but not exclusively, an HV transmission voltage) from the secondary DC/DC converter to an external supply network or power grid. The first and second dc transmission lines may be interfaced to the supply network or power grid by a converter having any suitable construction or topology. The power collection and transmission system can be used for point-to-onshore dc transmission or for multi-terminal dc mesh grids employing voltage source converters. The first and second dc transmission lines can have any suitable construction, including one that is particularly suitable for subsea use in the case where the secondary DC/DC converter is located offshore (e.g. single-core HVDC subsea cables with copper or aluminium conductors).

Typically all of the DC/DC converter modules will have the same topology so that the secondary DC/DC converter benefits from being a modular system with regards to assembly, maintenance and repair. A modular system allows the secondary DC/DC converter to be easily matched to the required voltage and power rating for the energy device farm and provides for additional improvement in redundancy, and hence in the reliability of the overall system.

The individual DC/DC converter modules of the secondary DC/DC converter preferably operate as step-up converters and can be configured to supply power from the dc collection networks to the dc transmission cable at any suitable voltage level. When considered as a whole, the or each secondary DC/DC converter will preferably also operate as a step-up converter.

The or each secondary DC/DC converter can be configured as a converter station with all of the DC/DC converter modules being co-located at a single platform. However, for energy device farms with a relatively low power rating (e.g. less than 200 MW) then the DC/DC converter modules can be distributed through the energy device farm and located at the energy devices. More particularly, the DC/DC converter module for each dc collection network can be located at an energy device of the associated cluster, typically at an end energy device of the associated cluster. (In this context the meaning of "end energy device" is the energy device in the cluster that is connected to the downstream end of the dc collection network and is therefore electrically closest to the DC/DC converter module.) If the energy devices are wind turbines then the DC/DC converter modules might be positioned within the tower that supports the wind turbine nacelle or on a hub structure adjacent the tower. An arrangement where each DC/DC converter modules is located at an energy device may be referred to as a "hub-type" and may have a monopole or bipole arrangement depending on the particular circumstances. In a monopole arrangement each of the DC/DC converter modules (or "hubs") that together form the secondary DC/DC converter module are connected together by suitable cable or busbars (e.g. single-core HVDC cables) with the first DC/DC converter module in the series being connected to a supply network or power grid by means of the first dc transmission line carrying a positive or negative transmission voltage and the last DC/DC converter module in the series being connected to the second dc transmission line which defines a return line. In a bipole arrangement a proportion of the DC/DC converter modules are connected together to provide a positive transmission voltage by means of the first dc transmission line and a proportion of the DC/DC converter modules are connected together to provide a negative transmission voltage by means of the second dc transmission line.

In general terms applicable to both converter station-type and hub-type arrangements, the DC/DC converter modules are preferably connected together in series on the transmission side as described in more detail below.

A first DC/DC converter module in the series preferably has a third dc terminal connected to the first dc transmission line and a fourth dc terminal that is connected to the third dc terminal of the next DC/DC converter module in the series. Each DC/DC converter module apart from the last DC/DC converter module in the series preferably has a fourth dc terminal that is connected to a third dc terminal of the next DC/DC converter module in the series. The last DC/DC converter module in the series preferably has a fourth dc terminal that is connected to the second dc transmission line.

In a monopole arrangement then the first dc transmission line carries a first positive or negative transmission voltage (typically, but not exclusively, an HV transmission voltage) and the second dc transmission line carries a dc voltage close to zero.

In a bipole arrangement then the first dc transmission line can carry a positive transmission voltage and the second dc transmission line can carry a negative transmission voltage or *vice versa.* To provide a bipole arrangement a proportion of the DC/DC converter modules are configured to provide a positive transmission voltage and a proportion of the DC/DC converter modules are configured to provide a negative transmission voltage. In a typical arrangement the proportion of DC/DC converter modules will be selected such that the positive and negative transmission voltages carried by the first and second dc transmission lines are substantially the same. In some arrangements the bipole arrangement can be achieved by connecting an adjacent pair of DC/DC converter modules to a ground or earth. More particularly, if the fourth terminal of a first DC/DC converter module is connected to the third terminal of a second DC/DC converter as described above then that interconnection (which can be provided by any suitable cable, busbar etc.) can also be connected to a ground or earth such that the fourth and third terminals of the first and second DC/DC converters, respectively, are connected to the ground or earth. The addition of an earth point as a voltage potential reference point might sometimes be necessary at the converter station. Instead of being connected to a ground or earth, the adjacent pair of DC/DC converters can be connected to a third dc transmission line which normally carries a voltage close to zero but could be used in the event of a fault or malfunction in one part of the secondary DC/DC converter to carry an appropriate transmission voltage with only certain of the DC/DC converter modules of the secondary DC/DC converter being operational.

On the dc collection network side then the first and second terminals of each DC/DC converter module can be connected to the dc lines of an associated dc collection network, optionally by means of the common distributed busbar or switching network described above. In an alternative arrangement where each dc collection network is connected to an associated secondary DC/DC converter then the DC/DC converter modules can be interconnected on the dc collection network side in series, parallel or a combination of both series and parallel. Each secondary DC/DC converter can have first and second dc terminals connected to dc lines of one or more of the dc collection networks.

Each of the interconnected DC/DC converter modules preferably includes a series of interconnected DC/DC converter units. The DC/DC converter modules themselves also therefore benefit from being a modular system. Each of the interconnected DC/DC converter units preferably includes a transformer, a DC/AC converter block connected to first transformer windings, and an AC/DC converter block connected to second transformer windings. The transformer provides galvanic isolation and can be a medium- or high-frequency transformer of single-phase or three-phase type, for example. The DC/DC converter modules can be a single-phase or three-phase type. The transformer will normally be significantly more physically compact than a line-frequency transformer with the same power rating that might be used in a conventional HVDC power transmission scheme. If a medium-frequency transformer is used then the DC/DC converter module will have a very high power density as a result of its operating frequency of about 400 Hz-20 kHz.

The power flow through the power collection and transmission system can be unidirectional with the power that is generated by the energy devices being supplied to a supply network or power grid along the first and second dc transmission lines. However, in some cases it might be useful to use the power collection and transmission system to supply power to the energy devices, or control power flow on the interconnections among several offshore wind turbine farms, or connect to a multi HVDC power grid, for example. The power flow can therefore be bidirectional and the topology of the primary and secondary DC/DC converters may be designed accordingly.

The DC/AC and AC/DC converter blocks of each DC/DC converter module may have any suitable topology such as conventional full-H or half-H bridges employing any suitable power semiconductor switching devices such as IGBTs, ETOs, GCTs or conventional diode bridges that provide passive rectification, for example.

The DC/DC converter units of each DC/DC converter module are connected together as described in more detail below.

The DC/AC converter blocks can be connected together in series to achieve higher output voltage or in parallel to increase output current, or a combination of both series and parallel, depending on a required MV level and power rating.

In the case of a series connection then the DC/AC converter block of the first DC/DC converter unit in the series preferably has a first dc terminal connected to a first dc line of the respective one of the dc collection networks and a second dc terminal that is connected to the first dc terminal of the DC/AC converter block of the next DC/DC converter unit in the series. The DC/AC converter block of each DC/DC converter unit apart from the last DC/DC converter unit in the series preferably has a second dc terminal that is connected to a first dc terminal of the DC/AC converter block of the next DC/DC converter unit in the series. The DC/AC converter block of the last DC/DC converter unit in the series preferably has a second dc terminal that is connected to a second dc line of the respective one of the dc collection networks.

In the case of a parallel connection then the DC/AC converter block of each DC/DC converter unit in the series preferably has a first dc terminal connected to a first dc line of the respective one of the dc collection networks and a second dc terminal that is connected to a second dc line of the same dc collection network.

The AC/DC converter blocks can also be connected together in series to achieve higher output voltage or in parallel to increase output current, or a combination of both series and parallel, depending on the HV transmission voltage level and power rating.

In the case of a series connection then the AC/DC converter block of each DC/DC converter unit apart from the last DC/DC converter unit in the series preferably has a second dc terminal that is connected to a first dc terminal of the AC/DC converter block of the next DC/DC converter unit in the series.

In the case of the DC/DC converter module that is the first in the series then the AC/DC converter block of the first DC/DC converter unit in the series has a first dc terminal that is preferably connected to the first dc transmission line. In the case of the DC/DC converter module that is the last in the series then the AC/DC converter block of the last DC/DC converter unit in the series has a second dc terminal that is preferably connected to the second dc transmission line.

For all intermediate DC/DC converter modules in the series (i.e. all DC/DC converter modules apart from the first and last in the series) then the AC/DC converter block of the first DC/DC converter unit in the series has a first dc terminal that is preferably connected to the second dc terminal of the AC/DC converter block of the last DC/DC converter unit of the preceding DC/DC converter module in the series. Similarly, the AC/DC converter block of the last DC/DC converter unit in the series has a second dc terminal that is preferably connected to the first dc terminal of the AC/DC converter block of the first DC/DC converter unit of the next DC/DC converter module in the series. In other words, the first and last AC/DC converter blocks of adjacent intermediate DC/DC converter modules are connected together such that the individual DC/DC converter modules are interconnected in series.

In the case of a parallel connection then the AC/DC converter block of each DC/DC converter unit in the series preferably has a first dc terminal connected to a third dc terminal of the respective DC/DC converter module and a second dc terminal connected to a fourth dc terminal of the respective DC/DC converter module.

The first dc terminal of the DC/AC converter block of the first DC/DC converter unit in the series effectively defines the first dc terminal of the DC/DC converter module and can be connected to a first dc line of the associated dc collection network by means of an off-load switch. The second dc terminal of the DC/AC converter block of the last DC/DC converter unit in the series effective defines the second terminal of the DC/DC converter module and can be connected to a second dc line of the associated dc collection network by means of an off-load switch. An interconnection between adjacent DC/AC converter units in the series can be connected to a third dc line of the associated dc collection by means of an off-load switch.

The first dc terminal of the AC/DC converter block of the first DC/DC converter unit in the series effectively defines the third terminal of the DC/DC converter module. The second dc terminal of the AC/DC converter block of the last DC/DC converter unit in the series effectively defines the fourth terminal of the DC/DC converter module. The third and fourth dc terminals of the DC/DC converter modules can be connected to one of the dc transmission lines or to a dc terminal of an adjacent DC/DC converter module in the series as described above. The connections between the AC/DC converter blocks of adjacent DC/DC converter modules can be made using any suitable cables or busbars, (e.g. single-core HVDC cables). It will be readily appreciated that in the case where the secondary DC/DC converter has a hub-type arrangement then the AC/DC converter blocks of adjacent DC/DC converter modules may be separated by relatively large distances and the cables or busbars that are used to connect them must be selected accordingly. For example, in the case of an offshore wind device farm then external cables might have a construction that is particularly suitable for subsea use. For a converter station-type arrangement then the AC/DC converter blocks of adjacent DC/DC converter modules are in close physical proximity to each other and the connection can be simplified.

In practice all connections to the dc terminals of each DC/DC converter modules can include an off-load switch or circuit breaker. The inherent fault current limited capacity of the DC/DC converter units can assist with the interruption and isolation of any network faults.

Each DC/DC converter module may also include a by-pass switch between its third and fourth dc terminals to enable that DC/DC converter module to be totally bypassed in case of a malfunction or repair.

The energy devices can be wind turbines incorporating an electrical machine (e.g. a generator) for supplying power to the power collection and transmission system. Each electrical machine may provide dc power and the terminals of each electrical machine may be connected directly to the associated primary DC/DC converter. Alternatively, the electrical machines may provide ac power (e.g. they may be configured as conventional permanent magnet type or induction type generators). In this case an auxiliary AC/DC converter will normally be provided between the terminals of the electrical machine and the associated primary DC/DC converter.

### Drawings

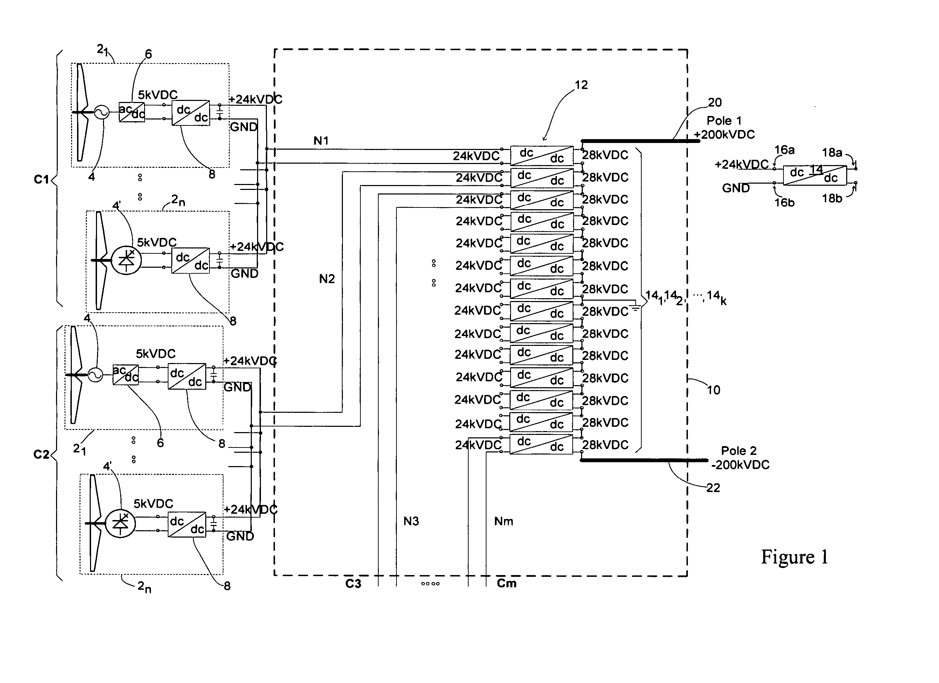

Figure 1 is a schematic diagram showing a first power collection and transmission system according to the present invention where the primary DC/DC converters are an asymmetric type, the secondary DC/DC converter has a converter station construction, the primary DC/DC converters in each cluster are connected to a particular DC/DC converter module within the converter station using one two-core MVDC cable or two single-core MVDC cables, and where the outputs of the DC/DC converter modules are connected in series to a bipole transmission network;

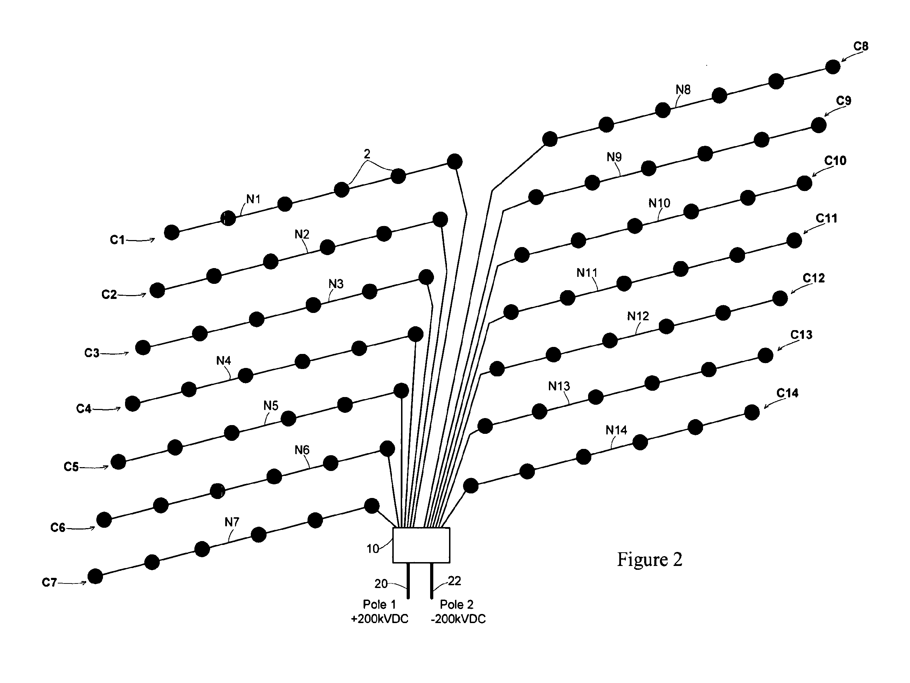

Figure 2 is a schematic diagram showing the complete wind turbine farm with which the first power collection and transmission system is to be used;

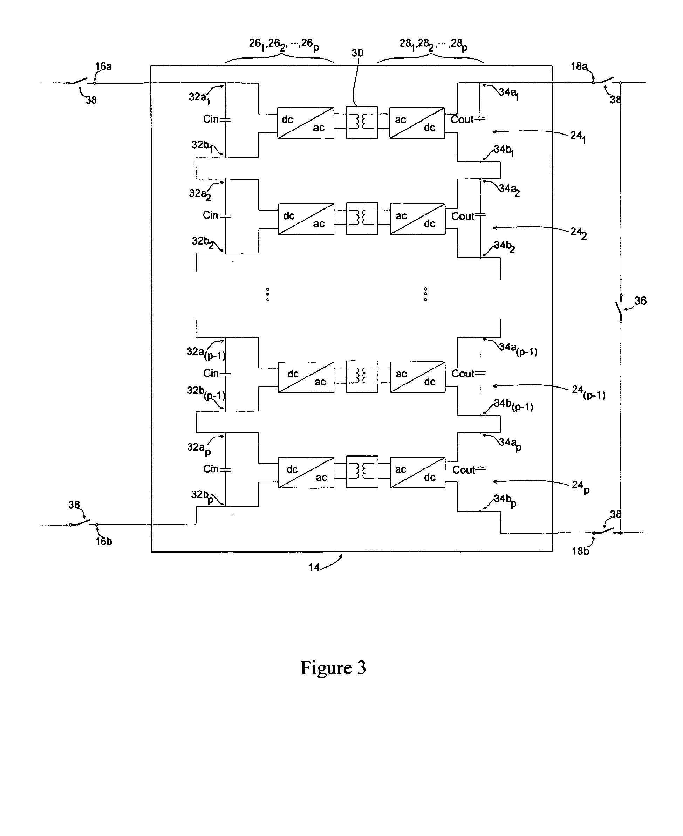

Figure 3 is a schematic diagram showing a topology for the DC/DC converter units of each DC/DC converter module that can be used for the first power collection and transmission system to provide bidirectional power flow;

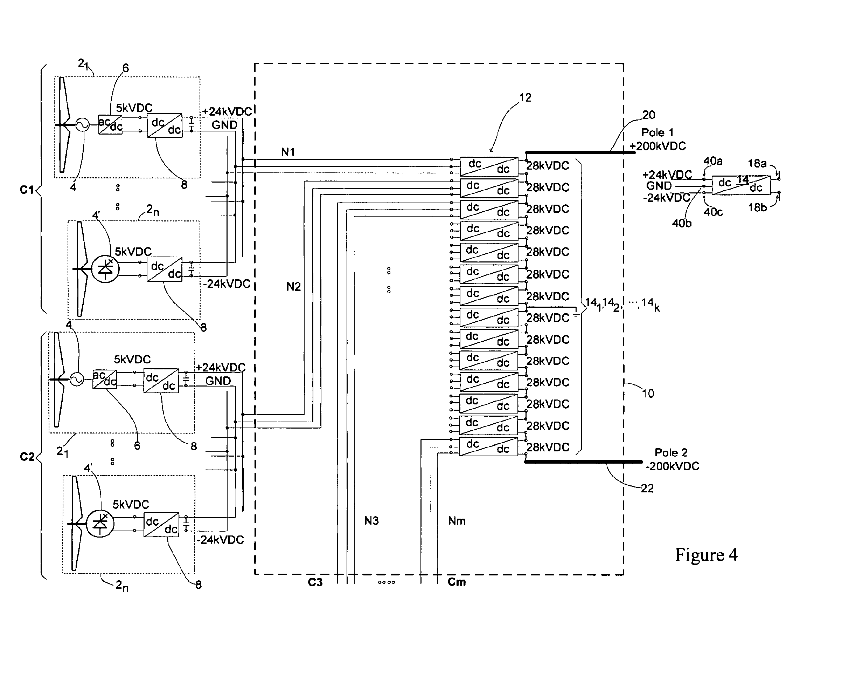

Figure 4 is a schematic diagram showing a second power collection and transmission system according to the present invention where the primary DC/DC converters are an asymmetric type, the secondary DC/DC converter has a converter station construction, the primary DC/DC converters in each cluster are connected to a particular DC/DC converter module within the converter station using one three-core MVDC cable or three single-core MVDC cables, and where the outputs of the DC/DC converter modules are connected in series to a bipole transmission network;

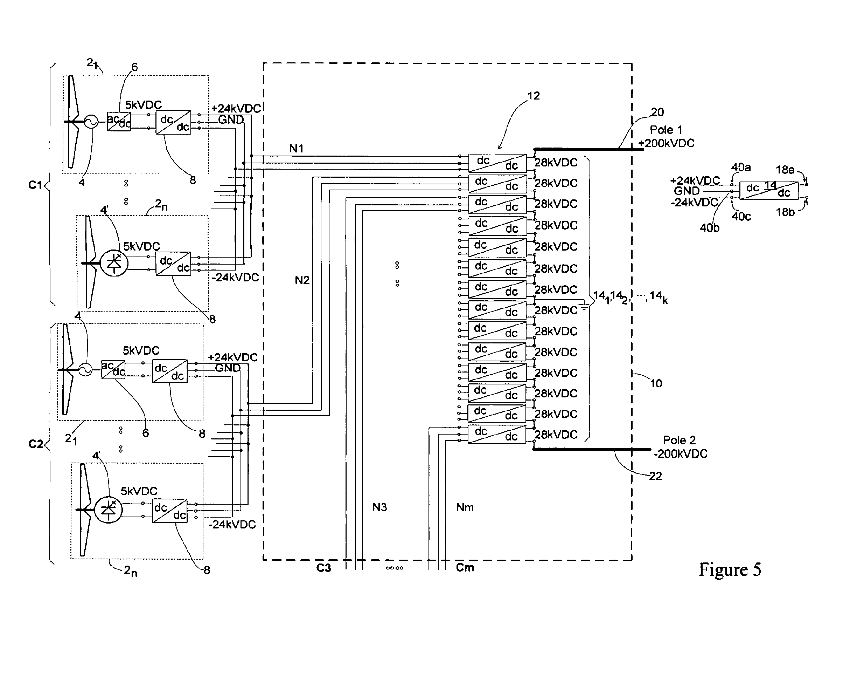

Figure 5 is a schematic diagram showing a third power collection and transmission system according to the present invention where the primary DC/DC converters are a symmetric type, the secondary DC/DC converter has a converter station construction, the primary DC/DC converters in each cluster are connected to a particular DC/DC converter module within the converter station using one three-core MVDC cable or three single-core MVDC cables, and where the outputs of the DC/DC converter modules are connected in series to a bipole transmission network;

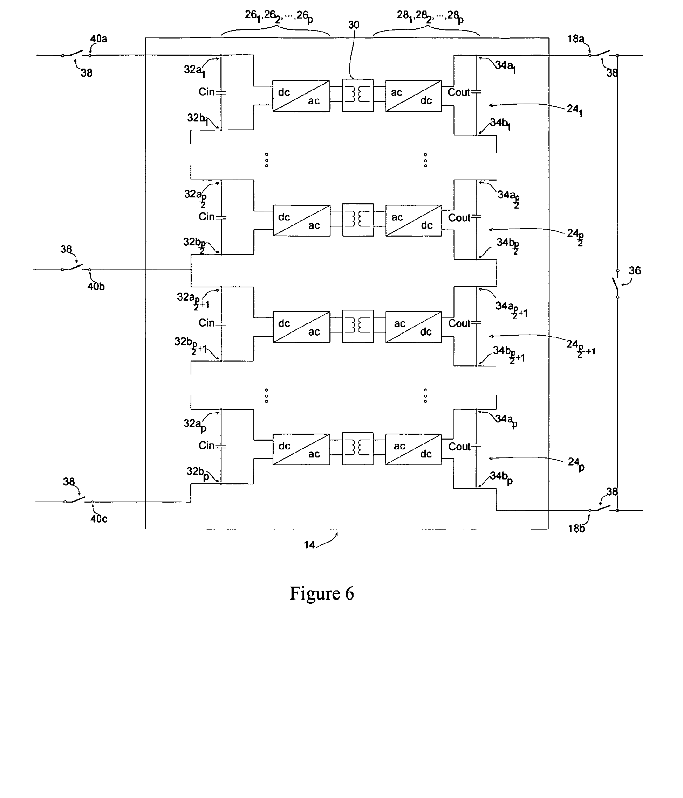

Figure 6 is a schematic diagram showing a topology for the DC/DC converter units of each DC/DC converter module that can be used for the second and third power collection and transmission system to provide bidirectional power flow;

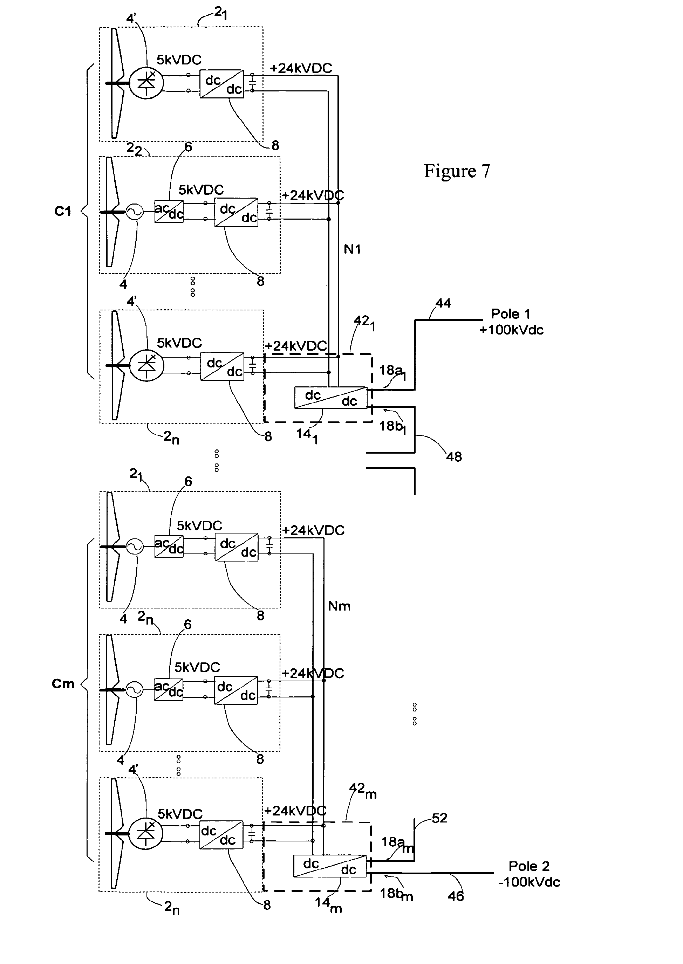

Figure 7 is a schematic diagram showing a fourth power collection and transmission system according to the present invention where the primary DC/DC converters are an asymmetric type, the secondary DC/DC converter has a hub-type construction where each cluster has a local DC/DC converter module, the primary DC/DC converters in each cluster are connected to the associated hub using one two-core MVDC cable or two single-core MVDC cables, and where the outputs of the local DC/DC converter modules are connected in series to provide a bipole output which is connected to a bipole transmission network;

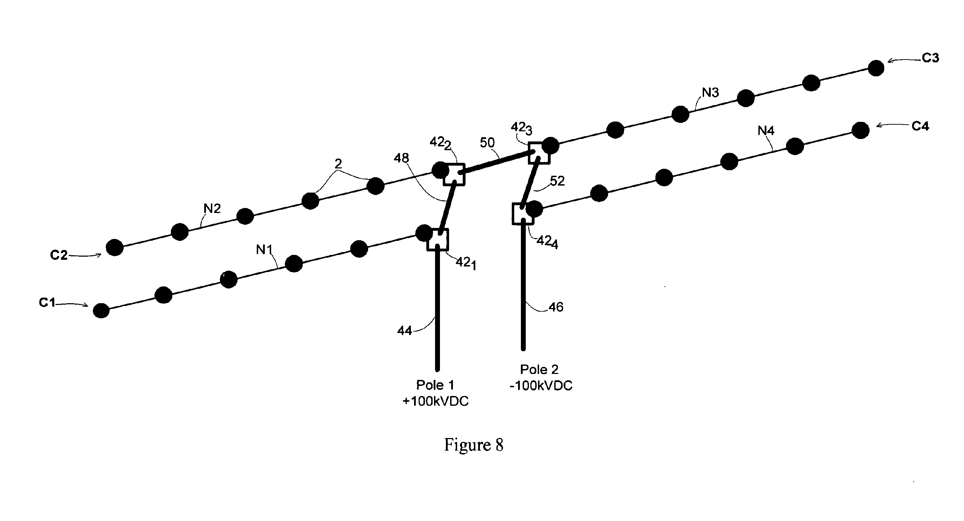

Figure 8 is a schematic diagram showing the complete wind turbine farm with which the fourth power collection and transmission system is to be used;

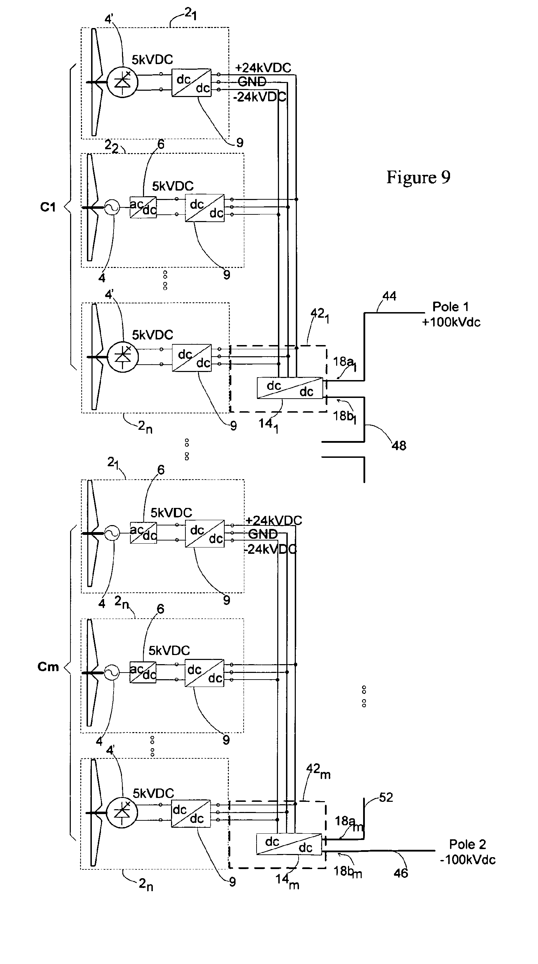

Figure 9 is a schematic diagram showing a fifth power collection and transmission system according to the present invention where the primary DC/DC converters are a symmetric type, the secondary DC/DC converter has a hub-type construction where each cluster has a local DC/DC converter module, the primary DC/DC converters in each cluster are connected to the associated hub using one three-core MVDC cable or three single-core MVDC cables, and where the outputs of the local DC/DC converter modules are connected in series to provide a bipole output which is connected to a bipole transmission network;

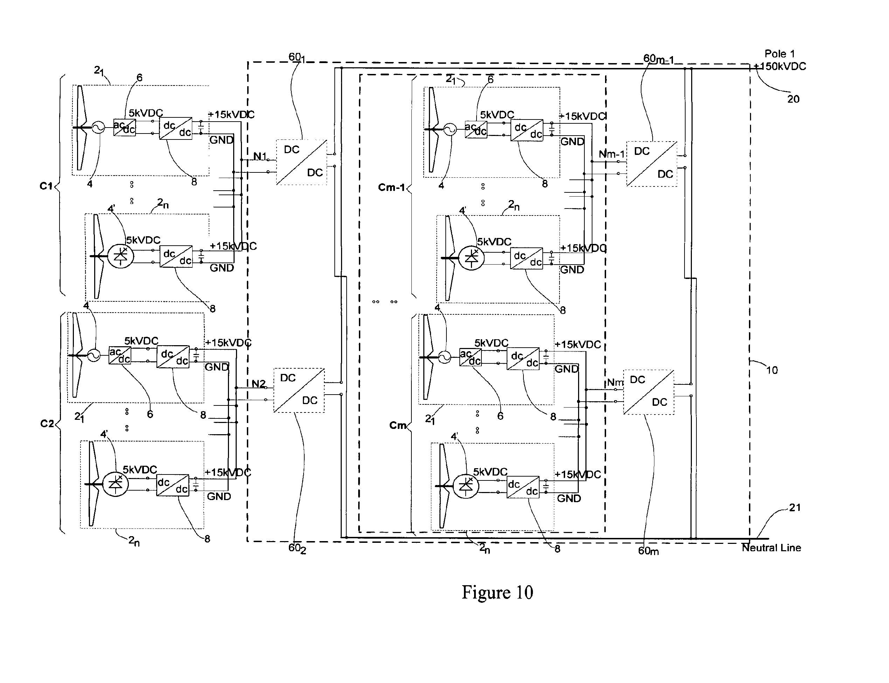

Figure 10 is a schematic diagram showing a sixth power collection and transmission system according to the present invention where the primary DC/DC converters are an asymmetric type, the secondary DC/DC converter has a converter station construction, the primary DC/DC converters in each cluster are connected to a particular DC/DC converter module within the converter station using one two-core MVDC cable or two single-core MVDC cables, and where the outputs of the DC/DC converter modules are connected in parallel to a monopole transmission network;

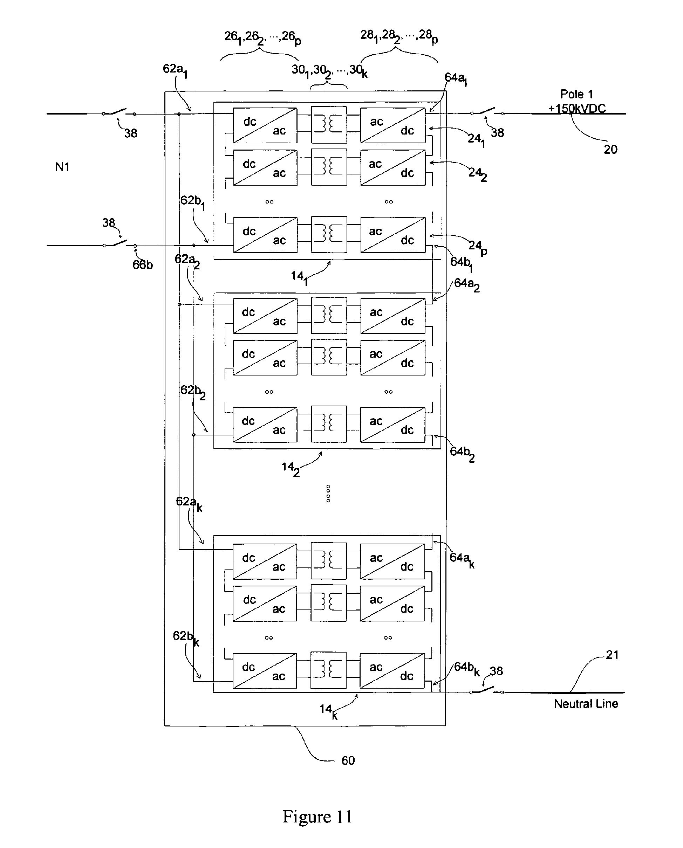

Figure 11 is a schematic diagram showing a topology for the DC/DC converter units of each DC/DC converter module that can be used for the sixth power collection and transmission system to provide bidirectional power flow;

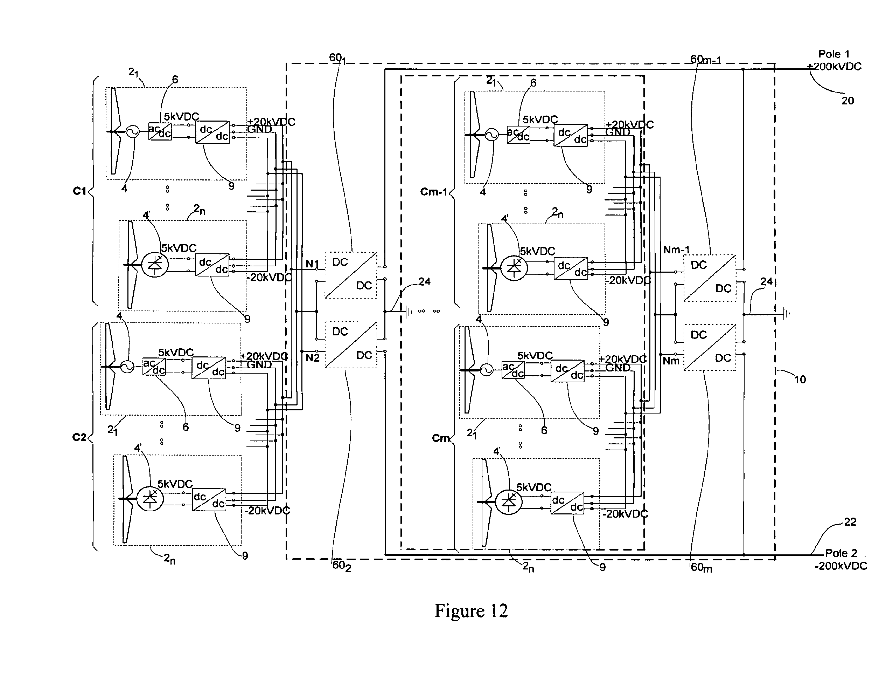

Figure 12 is a schematic diagram showing a seventh power collection and transmission system according to the present invention where the primary DC/DC converters are a symmetric type, the secondary DC/DC converter has a converter station construction, the primary DC/DC converters in each cluster are connected to a pair of interconnected secondary DC/DC converters within the converter station using one three-core MVDC cable or three single-core MVDC cables, and where the outputs of the DC/DC converter modules are connected in series to provide a bipole output, and where the respective bipole outputs are connected in parallel to a bipole transmission network;

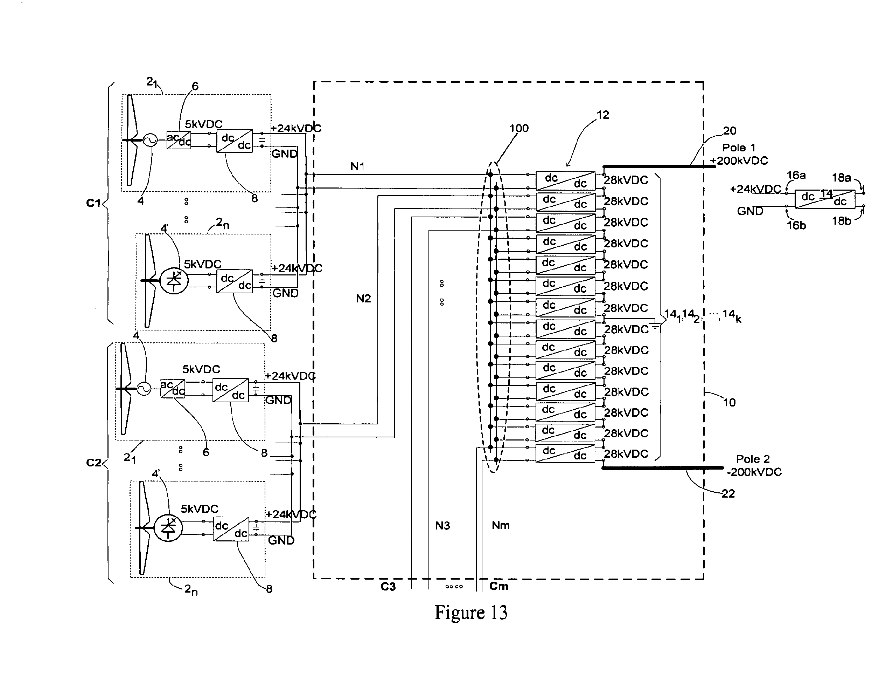

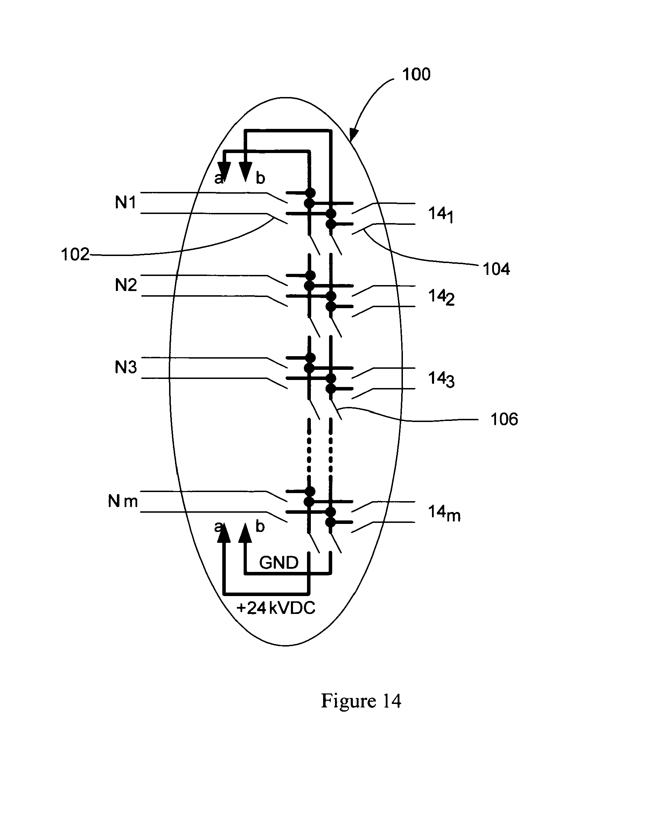

Figure 13 is a schematic diagram showing an eighth power collection and transmission system according to the present invention where the primary DC/DC converters are an asymmetric type, the secondary DC/DC converter has a converter station construction, the primary DC/DC converters in each cluster are connected to a particular DC/DC converter module within the converter station using one two-core MVDC cable or two single-core MVDC cables by means of an interposing dc distribution busbar or switching network, and where the outputs of the DC/DC converter modules are connected in series to a bipole transmission network; and Figure 14 is a schematic diagram showing the dc distribution busbar of Figure 13.

For convenience, any reference herein to AC/DC and DC/AC converter blocks are for a direction of power flow from the energy devices to a supply network or power grid. In other words, a DC/AC converter block will convert a dc input to an ac output and an AC/DC converter block will convert an ac input to a dc output for a direction of power flow from the energy device to the supply network or power grid.

In general terms it will be readily appreciated that each power collection and transmission system is designed to be used with a plurality of energy devices grouped into two or more clusters. The number of clusters m and the number of energy devices in each cluster n will depend on the overall design and operating requirements of the energy device farm. Suitable power ratings for the primary DC/DC converter and the DC/DC converter modules of the secondary DC/DC converter may be selected accordingly. All of the power collection and transmission systems described below share certain commonalities and where appropriate the same reference numeral will be used to refer to the same technical component or feature.

A first power collection and transmission system for a 504 MW offshore wind turbine farm will now be described with reference to Figures 1 to 3.

A plurality of wind turbines 2 are grouped together in fourteen clusters C1, C2... C 14 (i.e. m=14) that are arranged in parallel. Each cluster includes six wind turbines (i.e. n=6) meaning that the wind turbine farm includes a total of eighty-four wind turbines. The wind turbine farm topology is shown schematically in Figure 2 where each wind turbine is represented by a dot.

In the illustrated arrangement each wind turbine has a power rating of 6 MW and each cluster can therefore provide 36 MW.

Each wind turbine includes a turbine blade assembly mounted on a rotating shaft and whose pitch can be controlled by means of a pitch actuator (not shown) in order to optimise and/or limit the capture of wind energy into a generator 4. The generator 4 may be a conventional direct drive, permanent magnet or induction type that provides ac power. In this case, an auxiliary AC/DC converter 6 is provided between the generator terminals and a primary DC/DC converter 8. An alternative generator 4' may be configured to provide dc power and in this case no auxiliary AC/DC converter is needed and the generator terminals are connected directly to the primary DC/DC converter 8. Each generator 4' may include an "active" stator with an electronic commutator circuit using static power electronics that provides the designer with greater flexibility to increase performance. The power electronics are modular and fully integrated within the electrical machine, sharing cooling systems, ancillary systems, structures and enclosures to achieve a high power density.

It will be clear from Figure 1 that the wind turbines in each cluster may have different configurations with different generator types. However, in practice it might be generally preferred that all of the wind turbines in the wind turbine farm (or possibly in each cluster) have the same configuration with the same generator type for ease of installation and repair.

A primary DC/DC converter 8 is located at each wind turbine 2. The wind turbine farm therefore includes a total of eighty-four primary DC/DC converters. The primary DC/DC converters may be installed within the tower of each wind turbine together with other auxiliary components. The primary DC/DC converters act as step-up converters and in this arrangement have an asymmetric topology. The dc input to each primary DC/DC converter is 5 kV and the dc output (or collection voltage) is +24 kV (1600 A) but other dc inputs and dc outputs can be used. The primary DC/DC converters 8 can optionally function as on-line tap changers in order to provide a substantially constant dc output when the wind speed changes.

The primary DC/DC converters 8 have a power rating of 6 MW and can have any suitable construction or topology.

A dc collection network N is provided for each cluster C1, C2...C14. Each dc collection network N1, N2...N14 consists of one two-core cable (or two single-core cables) with a first (positive) dc line that carries a medium voltage (MV) collection voltage of +24 kV and a second dc line (labelled GND) that carries a dc voltage close to zero. It will be readily appreciated that other collection voltages are possible. The primary DC/DC converters 8 for each wind turbine in the cluster are connected to the dc collection network in parallel. In other words, the six primary DC/DC converters 8 for a first cluster C 1 are connected to a first dc collection network N1 in parallel, the six primary DC/DC converters for a second cluster C2 are connected to a second dc collection network N2 in parallel and so on. In Figure 2 each dc collection network N1, N2...N14 is represented schematically by the narrow lines linking each of the wind turbines 2 in that particular cluster to a converter station 10. The two dc output terminals of each primary DC/DC converter 8 are connected in parallel to the first and second dc lines of the associated dc collection network.

Although not shown, the dc output terminals of each primary DC/DC converter 8 can be connected to the dc collection network N by means of off-load switches or dc circuit breakers to allow the wind turbines 2 to be isolated from the power collection and transmission system in the event of a fault or for maintenance or repair.

The power collection and transmission system includes a secondary DC/DC converter 12. The secondary DC/DC converter 12 includes a series of interconnected DC/DC converter modules 14 which are co-located at the converter station 10. Fourteen DC/DC converter modules 14₁, 14₂...14₁₄ (i.e. k=14) are provided and each has a power rating of 36 MW or the equivalent power rating of the associated cluster.

Each DC/DC converter module 14 has first and second dc terminals 16a and 16b. The first and second dc terminals 16a and 16b are connected to the dc lines of an associated dc collection network. In other words, the first and second dc terminals 16a₁ and 16b₁ of the first DC/DC converter module 14₁ in the series are connected to the dc lines of the first dc collection network N1, the first and second dc terminals 16a₂ and 16b₂ of the second DC/DC converter module 14₂ in the series are connected to the dc lines of the second dc collection network N2 and so on. The power generated by the wind turbines 2 in each cluster C1, C2... C 14 is supplied to an associated DC/DC converter module 14₁, 14₂...14₁₄ of the secondary DC/DC converter 12 by the associated dc collection network N1, N2...N14.

Each DC/DC converter module 14 also has third and fourth dc terminals 18a and 18b. The third terminal 18a₁ of the first DC/DC converter module 14₁ is connected to a first (positive) dc transmission line 20. The fourth terminal 18b₁₄ of the last DC/DC converter module 14₁₄ is connected to a second (negative) dc transmission line 22. The dc transmission lines 20 and 22 can have any suitable construction (e.g. single-core HVDC cables) and in this bipole arrangement carry a high voltage (HV) transmission voltage of ±200 kV (1250 A). The dc transmission lines 20 and 22 can be connected to any convenient type of onshore supply network or power grid (not shown), optionally by means of a converter station.

A proportion of the DC/DC converter modules 14₁, 142...14₇ are configured to provide a positive transmission voltage and a proportion of the DC/DC converter modules 14₈, 14₉...14₁₄ are configured to provide a negative transmission voltage. Adjacent DC/DC converter modules 14₇ and 14₈ in the series are connected to an earth or ground connection. More particularly, the fourth dc terminal 18b₇ of DC/DC converter 14₇ is connected to the third dc terminal 18a₈ of DC/DC converter 14₈ as shown in Figure 1 and also connected to the earth connection. In an alternative arrangement that is not shown the earth or ground connection can be replaced by a third dc transmission line. In normal operation of the power collection and transmission system then the third dc transmission line would carry a zero voltage. However, if there was a fault in one or more of the DC/DC converter modules 14 then it might still be possible for the secondary DC/DC converter 12 to function with the third dc transmission line carrying a transmission voltage. For example, if there was a fault in any of the DC/DC converter modules 14₁, 14₂...14₇ configured to provide a positive transmission voltage then they could be isolated and the secondary DC/DC converter 12 could continue to function by supplying a positive transmission voltage through the third dc transmission line and a negative transmission voltage through the second dc transmission line 22. Although faulty DC/DC converter modules 14 could be isolated as already described, for example, to facilitate repair, they could also be left in circuit according to the known principles of series redundancy. In either case the output voltage contribution of failed DC/DC converter modules 14 to the whole of the secondary DC/DC converter 12 would be zero. It will be readily appreciated that only a reduced transmission voltage could be supplied under these circumstances. Alternatively, the secondary DC/DC converter 12 could be designed to have sufficient output voltage margin and regulation to allow the desired output voltage to be achieved whilst at least one faulty DC/DC converter module 14 contributes no output voltage.

The power and transmission system can also have a monopole arrangement where the first dc transmission line 20 carries a positive (or negative) HV transmission voltage and the second dc transmission line 22 carries a return voltage or *vice versa.* In this case, the earth or ground connection between adjacent DC/DC converter modules 14₇ and 14₈ can be removed.

The DC/DC converter modules 14 of the secondary DC/DC converter are interconnected in series as described in more detail below. Although Figure 1 shows fourteen DC/DC converter modules 14₁, 14₂...4₁₄ it will be readily appreciated that the secondary DC/DC converter 12 may have any suitable number of DC/DC converter modules depending on the number of clusters and the overall design requirements of the wind turbine farm.

With the exception of the last DC/DC converter module 14₁₄ in the series, the fourth terminal 18b of each DC/DC converter module in connected to the third dc terminal 18a of the next DC/DC converter module in the series. In other words, the fourth dc terminal 18b₁ of the first DC/DC converter module 14₁ in the series is connected to the third dc terminal 18a₂ of the second DC/DC converter module 14₂ in the series, the fourth dc terminal 18b₂ of the second DC/DC converter module 14₂ in the series is connected to the third dc terminal 18a₃ of the third DC/DC converter module 14₃ in the series and so on.

The series interconnections between the adjacent DC/DC converter modules 14 on the HVDC transmission side can be made using any suitable busbars or dc cables.

The DC/DC converter modules 14 act as step-up converters and will now be explained in more detail with reference to Figure 3.

Each DC/DC converter module 14 includes a series of DC/DC converter units 24. In the arrangement shown in Figure 3, each DC/DC converter module includes twelve DC/DC converter units (i.e. p=12) but it will be readily appreciated that any suitable number of DC/DC converter units can be provided depending on the design requirements.

Each DC/DC converter unit 24 may consist of a conventional full-H bridge DC/AC converter block 26 employing suitable power semiconductor switching devices and a conventional full-H bridge AC/DC converter block 28 employing suitable power semiconductor switching devices. Such an arrangement is suitable for bidirectional power flow so that power can be supplied to the generator 4 of each wind turbines from a supply network (not shown) in certain circumstances. In alternative arrangements the AC/DC converter block 28 can be configured as a diode bridge which operates as a passive rectifier. Such alternative arrangements are suitable for unidirectional power flow from the wind turbines to the supply network and where there is no need for the AC/DC converter block 28 to provide an inverter function.

The DC/AC and AC/DC converter blocks 26 and 28 are provided on each side of a medium- or high-frequency transformer 30 which provides galvanic isolation.

Each DC/DC converter unit 24 includes a first pair of dc terminals 32a and 32b and a second pair of dc terminals 34a and 34b. The first pair of dc terminals 32a and 32b are defined by the dc terminals of each DC/AC converter block 26 while the second pair of dc terminals 34a and 34b are defined by the dc terminals of each AC/DC converter block 28. The ac terminals of each DC/AC converter block 26 are connected to the primary winding of the transformer 30. The ac terminals of each AC/DC converter block 28 are connected to the secondary winding of the transformer 30.

The DC/DC converter units 24 of each DC/DC converter module 14 are interconnected as described in more detail below.

Although in Figure 3 the DC/AC converter blocks 26 are shown to be interconnected in series, they can also be interconnected in parallel, or a combination of both series and parallel. More particularly, the first dc terminal 32a₁, 32a₂...32aₚ of each DC/AC converter block 26₁, 26₂...26ₚ can be connected to a first dc line of the dc collection network that is associated with the DC/DC converter module and the second dc terminal 32b₁, 32b₂...32bₚ of each DC/AC converter block can be connected to a second dc line of the same dc collection network.

The first dc terminal 32a₁ of the first DC/AC converter block 26₁ defines the first dc terminal 16a for the DC/DC converter module 14 and is connected to a first dc line of the dc collection network that is associated with the DC/DC converter module. With the exception of the DC/AC converter block 26ₚ that forms part of the last DC/DC converter unit 24ₚ, the second dc terminal 32b of each DC/AC converter block 26 is interconnected in series to the first dc terminal 32a of the DC/AC converter block that forms part of the next DC/DC converter unit in the series. In other words, the second dc terminal 32b₁ of the DC/AC converter block 26₁ that forms part of the first DC/DC converter unit 24₁ in the series is connected to the first dc terminal 32a₂ of the DC/AC converter block 26₂ that forms part of the second DC/DC converter unit 24₂ in the series, the second dc terminal 33b₂ of the DC/AC converter unit 26₂ that forms part of the second DC/DC converter unit 24₂ in the series is connected to the first dc terminal 32a₃ of the DC/AC converter block 26₃ that forms part of the third DC/DC converter unit 24₃ in the series and so on. The second dc terminal 32b₍ₚ₋₁₎ of the DC/AC converter block 26₍ₚ₋₁₎ that forms part of the penultimate DC/DC converter unit 24₍ₚ₋₁₎ in the series is connected to the first dc terminal 32aₚ of the DC/AC converter block 26ₚ that forms part of the last DC/DC converter unit 24ₚ in the series.

The second dc terminal 32bₚ of the DC/AC converter block 26ₚ that forms part of the last DC/DC converter unit 24ₚ in the series defines the second dc terminal 16b of the DC/DC converter module 14 and is connected to a second dc line of the dc collection network that is associated with the DC/DC collection module.

The AC/DC converter blocks 28 are also interconnected in series. However, it will be readily appreciated that the AC/DC converter blocks can also be interconnected in parallel or a combination of both series and parallel.

The first dc terminal 34a₁ of the first AC/DC converter block 28₁ defines the third dc terminal 18a for the DC/DC converter module 14. If the DC/DC converter module is the first in the series (i.e. it is DC/DC converter module 14₁ shown in Figure 1) then the first dc terminal 34a₁ of the first AC/DC converter block 28₁ is connected to the first dc transmission line 20. Otherwise, the first dc terminal 34a₁ of the first AC/DC converter block 28₁ is connected to the second dc terminal 34bₚ of the last AC/DC converter block 28ₚ of the preceding DC/DC converter module in the series.

With the exception of the AC/DC converter block 28ₚ that forms part of the last DC/DC converter unit 24ₚ, the second dc terminal 34b of each AC/DC converter block 28 is interconnected in series to the first dc terminal 34a of the AC/DC converter block that forms part of the next DC/DC converter unit in the series. In other words, the second dc terminal 34b₁ of the AC/DC converter block 28₁ that forms part of the first DC/DC converter unit 24₁ in the series is connected to the first dc terminal 34a₂ of the AC/DC converter block 28₂ that forms part of the second DC/DC converter unit 24₂ in the series, the second dc terminal 34b₂ of the AC/DC converter unit 28₂ that forms part of the second DC/DC converter unit 24₂ in the series is connected to the first dc terminal 34a₃ of the AC/DC converter block 28₃ that forms part of the third DC/DC converter unit 24₃ in the series and so on. The second dc terminal 34b₍ₚ₋₁₎ of the AC/DC converter block 28₍ₚ₋₁₎ that forms part of the penultimate DC/DC converter unit 24₍ₚ₋₁₎ in the series is connected to the first dc terminal 34aₚ of the AC/DC converter block 28ₚ that forms part of the last DC/DC converter unit 24ₚ in the series.

The second dc terminal 34bₚ of the AC/DC converter block 28ₚ that forms part of the last DC/DC converter unit 24ₚ in the series defines the fourth dc terminal 18b of the DC/DC converter module 14. If the DC/DC converter module is the last in the series (i.e. it is DC/DC converter module 14₁₄ shown in Figure 1) then the second dc terminal 34bₚ of the last AC/DC converter block 28ₚ is connected to the second dc transmission line 22. Otherwise, the second dc terminal 34bₚ of the last AC/DC converter block 28ₚ is connected to the first dc terminal 34a₁ of the first AC/DC converter block 28₁ of the next DC/DC converter module in the series.

A by-pass switch 36 can be connected between the third and fourth dc terminals 18a and 18b to enable each DC/DC converter module 14 to be isolated from the remaining DC/DC converter modules in the secondary DC/DC converter.

External connections to the first, second, third and fourth dc terminals 16a, 16b, 18a and 18b of each DC/DC converter module 14 can be made by off-load switches 38.

Second and third power collection and transmission systems for a 504 MW offshore wind turbine farm will now be described with reference to Figures 4 and 5.

The second and third power collection and transmission systems are broadly similar to the first power collection and transmission system described above, but each dc collection network N1, N2...N14 consists of one three-core cable (or three single-core cables) with a first (positive) dc line that carries a medium voltage (MV) collection voltage of +24 kV, a second dc line (labelled GND) that carries a dc voltage close to zero and a third (negative) dc line that carries a medium voltage collection voltage of -24 kV. It will be readily appreciated that other collection voltages are possible.

In the second power collection and transmission system shown in Figure 4 the primary DC/DC converters 8 have an asymmetric topology. Some of the primary DC/DC converters 8 provide a dc output of +24 kV (1600A) and their two dc output terminals are connected in parallel to the first and second dc lines of the associated dc collection network. Other primary DC/DC converters 8 provide a dc output of -24 kV (1600 A) and their two dc output terminals are connected in parallel to the second and third dc lines of the associated dc collection network.

In the third power collection and transmission system shown in Figure 5 the primary DC/DC converters 9 have a symmetrical topology and provide a dc output of ±24 kV (800 A). The three dc output terminals of each primary DC/DC converter 9 are therefore connected in parallel to the first, second and third lines of the associated dc collection network.

In both the second and third power collection and transmission systems each DC/DC converter module 12 has first, second and third dc terminals 40a, 40b and 40c. These are connected to the dc lines of an associated dc collection network. In other words, the first dc terminal 40a₁ of the first DC/DC converter module 14₁ in the series is connected to the first (positive) dc line of the first dc collection network N1, the second dc terminal 40b₁ of the first DC/DC converter module 14₁ in the series is connected to the second dc line of the first dc collection network N1, and the third dc terminal 40b₁ of the first DC/DC converter network 14₁ in the series is connected to the third (negative) dc line of the first dc collection network N 1.

The DC/AC converter blocks 26 and AC/DC converter blocks 28 of both the second and third power collection and transmission system are interconnected in series as shown in Figure 6 and as described above in relation to the first power collection and transmission system. However, it will be readily appreciated that the DC/AC converter blocks 26 are connected in such a way as to define the second dc terminal 40b for the DC/DC converter module 14. In particular the second dc terminal 40b is connected to the existing interconnection between the second dc terminal 32b₆ of the DC/AC converter block 26₆ that forms part of the sixth DC/DC converter unit 24₆ in the series and the first dc terminal 32a₇ of the DC/AC converter block 26₇ that forms the seventh DC/DC converter unit 24₇.

Each DC/DC converter unit 24 may consist of a conventional full-H bridge DC/AC converter block 26 employing suitable power semiconductor switching devices and a conventional full-H bridge AC/DC converter block 28 employing suitable power semiconductor switching devices. Such an arrangement is suitable for bidirectional power flow so that power can be supplied to the generator 4 of each wind turbines from a supply network (not shown) in certain circumstances. In alternative arrangements the AC/DC converter block 28 can be configured as a diode bridge which operates as a passive rectifier. Such alternative arrangements are suitable for unidirectional power flow from the wind turbines to the supply network and where there is no need for the AC/DC converter block 28 to provide an inverter function.

A fourth power collection and transmission system for a 144 MW offshore wind turbine farm will now be described with reference to Figures 7 and 8.

The fourth power collection and transmission system is broadly similar to the first to third power collection and transmission systems described above, but the secondary DC/DC converter 12 has a different configuration. Instead of the DC/DC converter modules 14 being co-located at the converter station 10 they are distributed through the wind turbine farm (i.e. the secondary DC/DC converter has a hub-type construction). It will be readily appreciated from the above description that the dc collection network for each cluster is associated with a particular DC/DC converter module 14. In the fourth power collection and transmission system the DC/DC converter module 14 for each dc collection network N is located at one of the wind turbines, and more specifically at the end wind turbine in the cluster. The end wind turbine is the one that is at the downstream end of the dc collection network N. Each DC/DC converter module 14 can be positioned in a suitable hub structure that is adjacent the wind turbine or within the tower of the wind turbine that supports the nacelle.

In the illustrated arrangement a plurality of wind turbines 2 are grouped together in four clusters C1, C2... C4 (i.e. m=4) that are arranged in parallel. Each cluster includes six wind turbines (i.e. n=6) meaning that the wind turbine farm includes a total of twenty-four wind turbines. The wind turbine farm topology is shown schematically in Figure 8 where each wind turbine is represented by a dot.

In the illustrated arrangement each wind turbine 2 has a power rating of 6 MW and each cluster can therefore provide 36 MW.

In Figure 8 each dc collection network N1, N2...N4 is represented schematically by the narrow lines linking each of the wind turbines 2 in that particular cluster to a hub 42 which includes the associated DC/DC converter module 14.

The DC/DC converter modules 14 are interconnected in series as described above. In the illustrated arrangement a first (positive) dc transmission line 44 (e.g. a single-core HVDC cable) is connected to the third dc terminal 18a₁ of the DC/DC converter module 14₁ associated with the dc collection network N1 and a second (negative) dc transmission line 46 (e.g. a single-core HVDC cable) is connected to the fourth dc terminal 18b₄ of the DC/DC converter module 144 associated with the dc collection network N4. This is a bipole arrangement with the dc transmission lines 44 and 46 carrying a HV transmission voltage of ±100 kV. The first and second DC/DC converter modules 14₁ and 14₂ are therefore configured to provide a positive transmission voltage and the third and fourth DC/DC converter modules 14₃ and 14₄ are configured to provide a negative transmission voltage.

The fourth dc terminal 18b₁ of the DC/DC converter module 14₁ associated with the dc collection network N1 is connected to the third dc terminal 18a₂ of the DC/DC converter module 14₂ associated with the dc collection network N2. The connection is made by a further dc transmission line 48 (e.g. a single-core HVDC cable). The fourth dc terminal 18b₂ of the DC/DC converter module 14₂ associated with the dc collection network N2 is connected to the third dc terminal 18a₃ of the DC/DC converter module 14₃ associated with the dc collection network N3. The connection is made by a further dc transmission line 50 (e.g. a single-core HVDC cable). Finally, the fourth dc terminal 18b₃ of the DC/DC converter 14₃ associated with the dc collection network N3 is connected to the third dc terminal 18a₄ of the DC/DC converter module 14₄ associated with the dc collection network N4. The connection is made by a further dc transmission line 52 (e.g. a single-core HVDC cable). The fourth dc terminal 18b₂ of DC/DC converter module 14₂ is connected to the third dc terminal 18a₃ of DC/DC converter module 14₃ and also to an earth or ground.

In this system, and correspondingly in other hub type systems, the dc transmission lines 44, 48, 50, 52 and 46 form a loop whose area might be sufficient to cause an unacceptably large radiated magnetic field to be developed. This can be remedied by forcing the dc transmission line 46 to be routed adjacent to dc transmission lines 44, 48, 50 and 52 to cause field cancellation, for example.

In an alternative monopole arrangement (not shown) the DC/DC converter modules 14 are connected together with dc transmission lines (e.g. single-core HVDC cables) carrying a HV transmission voltage of +100 kV. A second dc transmission line connected to an end DC/DC converter module can act as a return line.

Each primary DC/DC converter 8 has an asymmetric topology and the dc output is +24 kV (1600 A). Each dc collection network N1, N2...N14 also consists of one two-core cable (or two single-core cables) with a first (positive) dc line that carries a MV collection voltage of +24 kV and a second dc line (labelled GND) that carries a dc voltage close to zero. The two dc output terminals of each primary DC/DC converter 8 are connected in parallel to the first and second dc lines of the associated dc collection network. It will therefore be readily appreciated that the arrangement on the input side of the secondary DC/DC converter is identical to that used in the first power collection and transmission system shown in Figure 1.

A fifth power collection and transmission system for a 144 MW offshore wind turbine farm will now be described with reference to Figure 9.

The fifth power collection and transmission system is broadly similar to the fourth power collection and transmission system described above but each primary DC/DC converter 9 has a symmetric topology and the dc output is ±24 kV (800 A). Each dc collection network N1, N2...N14 consists of one three-core cable (or three single-core cables) with a first (positive) dc line that carries a MV collection voltage of +24 kV, a second dc line (labelled GND) that carries a voltage close to zero and a third dc line that carries a medium voltage collection voltage of -24 kV. The three dc output terminals of each primary DC/DC converter 9 are connected in parallel to the first, second and third dc lines of the associated dc collection network. It will therefore be readily appreciated that the arrangement on the input side of the secondary DC/DC converter is identical to that used in the third power collection and transmission system shown in Figure 5. It would also be possible for each primary DC/DC converter to have an asymmetric topology with some primary DC/DC converters having a dc output of +24 kV (1600 A) with their two dc output terminals being connected in parallel to the first and second dc lines of the associated dc collection network and other primary DC/DC converters having a dc output of -24 kV (1600 A) with their two dc output terminals being connected in parallel to the second and third dc lines of the associated dc collection network. Such an arrangement for the input side of the secondary DC/DC converter would be identical to that used in the second power collection and transmission system shown in Figure 4.

The fourth and fifth power collection and transmission systems where the DC/DC converter modules are located at an end wind turbine of each cluster are particularly suitable for wind turbine farms with a lower total power rating (e.g. <200 MW).

A sixth power collection and transmission system for a 240 MW offshore wind turbine farm will now be described with reference to Figures 10 and 11. The sixth power collection and transmission system is broadly similar to the first system described above with reference to Figures 1 to 3 and only the relevant differences will be outlined below.

A plurality of wind turbines 2 are grouped together in ten clusters C1, C2...C10 (i.e. m=10) that are arranged in parallel. Each cluster includes four wind turbines (i.e. n=4) meaning that the wind turbine farm includes a total of forty wind turbines.

The power collection and transmission system include a plurality of secondary DC/DC converters 60 that are connected in parallel to the dc transmission lines 20 and 21.

The power generated by the wind turbines 2 in each cluster C1, C2...C10 is supplied to an associated secondary DC/DC converter 60 by the associated dc collection network N1,N2...N10.

Each secondary DC/DC converter 60 includes a series of interconnected DC/DC converter modules 14 which are co-located in parallel at the converter station 10. Five DC/DC converter modules 14₁, 14₂...14₅ are provided (i.e. k=5) and each has a power rating of 4.8 MW. Each secondary DC/DC converter 60 therefore has a power rating of 24 MW or the equivalent power rating of the associated cluster.

Each DC/DC converter module 14 has first and second terminals 62a and 62b. The first and second terminals 62a and 62b are connected in parallel to the dc lines of an associated dc collection network N1, N2...N10. In other words, the first and second terminals 62a₁ and 62b₁ of the first DC/DC converter module 14₁ in the series are connected to the first and second dc lines of the first dc collection network N1; the first and second terminals 62a₂ and 62b₂ of the second DC/DC converter module 14₂ in the series are connected to the first and second dc lines of the first dc collection network N 1 and so on.

Each DC/DC converter module 14 also has third and fourth terminals 64a and 64b. The third terminal 64a₁ of the first DC/DC converter module 14₁ is connected to a first (positive) dc transmission line 20. The fourth terminal 64b₅ of the last DC/DC converter module 14₅ in the series is connected to the second (neutral) dc transmission line 21. The dc transmission lines 20 and 21 can have any suitable construction (e.g. single-core, integrated two-core HVDC cables) and in this monopole arrangement carry a HV transmission voltage of +150 kV (1600 A). The dc transmission lines 20 and 21 can be connected to any convenient type of onshore supply network or power grid (not shown), optionally by means of a DC/AC converter station.

A proportion of the DC/DC converter modules 14₁, 14_{2.}..14₅ within each secondary DC/DC converter 60 are configured to provide a positive transmission voltage. Adjacent DC/DC converter modules 14 are connected in series on the HVDC transmission line side and in parallel on the dc collection network side.

With the exception of the last DC/DC converter module 14₅ in the series the fourth terminal 64b of each DC/DC converter module is connected to the third dc terminal 64a of the next DC/DC converter module in the series. In other words, the fourth dc terminal 64b₁ of the first DC/DC converter module 14₁ in the series is connected to the third dc terminal 64a₂ of the second DC/DC converter module 14₂ in the series, the fourth dc terminal 64b₂ of the second DC/DC converter module 14₂ in the series is connected to the third dc terminal 64a₃ of the third DC/DC converter module 14₃ in the series and so on. The series interconnections between the adjacent DC/DC converter modules 14 on the HVDC transmission side can be made using any suitable busbars or dc cables.

On the dc collection network side, the first dc terminal 62a₁ of the first DC/DC converter module 14₁ is connected in parallel to the first dc terminal 62a₂ of the second DC/DC converter module 14₂, and the first dc terminal 62a₃ of the third DC/DC converter module 14₃, and so on; the second dc terminal 62b₁ of the first DC/DC converter module 14₁ is connected in parallel to the second dc terminal 62b₂ of the second DC/DC converter module 14₂, and the second dc terminal 62b₃ of the third DC/DC converter module 14_{3,} and so on. The parallel interconnections between the adjacent DC/DC converter modules 14 and the first and second dc lines of the associated dc collection network N1, N2...N10 can be made using any suitable busbars or dc cables.

The DC/DC converter modules 14 act as step-up converters and will now be explained in more detail with reference to Figure 11.

Each DC/DC converter module 14 includes a series of DC/DC converter units 24. In the arrangements shown in Figure 11, each DC/DC converter module 14 includes ten DC/DC converter units (i.e. p=10) but it will be readily appreciated that any suitable number of DC/DC converter units can be provided depending on the design requirements.

Each DC/DC converter unit 24 may consist of a conventional full-H bridge DC/AC converter block 26 employing suitable power semiconductor switching devices and a conventional full-H bridge AC/DC converter block 28 employing suitable power semiconductor switching devices. Such an arrangement is suitable for bidirectional power flow so that power can be supplied to the generator 4 of each wind turbines from a supply network (not shown) in certain circumstances. In alternative arrangements the AC/DC converter block 28 can be configured as a diode bridge which operates as a passive rectifier. Such alternative arrangements are suitable for unidirectional power flow from the wind turbines to the supply network and where there is no need for the AC/DC converter block 28 to provide an inverter function.

The DC/AC and AC/DC converter blocks 26 and 28 are provided on each side of a medium- or high-frequency transformer 30 which provides galvanic isolation.

The DC/DC converter units 24 of each DC/DC converter module 14 are interconnected in series, parallel, or a combination of both series and parallel as described above with reference to Figure 3.

A seventh power collection and transmission system for a 504 MW offshore wind turbine farm will now be described with reference to Figure 12. The seventh power collection and transmission system is broadly similar to the sixth system described above with reference to Figures 10 and 11 and only the relevant differences will be outlined below.

A plurality of wind turbines 2 are grouped together in fourteen clusters C1, C2...C14 (i.e. m=14) that are arranged in parallel. Each cluster includes four wind turbines (i.e. n=4) meaning that the wind turbine farm includes a total of fifty-six wind turbines.

The power collection and transmission system include a plurality of secondary DC/DC converters 60 that are connected in parallel to the dc transmission lines 20 and 22.

Each dc collection network N1, N2...N14 consists of one three-core cable (or three single-core cables) with a first (positive) dc line that carries a medium voltage (MV) collection voltage of +20 kV, a second dc line (labelled GND) that carries a dc voltage close to zero and a third (negative) dc line that carries a medium voltage collection voltage of -20 kV. It will be readily appreciated that other collection voltages are possible. In Figure 12 the primary DC/DC converters 9 have a symmetrical topology and provide a dc output of ±20 kV (900 A). The three dc output terminals of each primary DC/DC converter 9 are therefore connected in parallel to the first, second and third lines of the associated dc collection network.

The power generated by the wind turbines in two clusters C1 and C2 is supplied by the dc collection networks N1 and N2 to an interconnected pair of secondary DC/DC converters 60₁ and 60₂ which are generally as described above with reference to Figures 10 and 11.

The third dc terminal of secondary DC/DC converter 60₁ is connected to the first (positive) dc transmission line 20 and the fourth dc terminal of secondary DC/DC converter 60₁ is connected in series with the third dc terminal of secondary DC/DC converter 60₂. The fourth dc terminal of secondary DC/DC converter 60₁ and the third dc terminal of secondary DC/DC converter 60₂ are connected to a neutral or earth line, or to third dc transmission line or cable. The fourth dc terminal of secondary DC/DC converter 60₂ is connected to the second (negative) dc transmission line 22. The dc transmission lines 20 and 22 can have any suitable construction (e.g. single-core, integrated two-core HVDC cables) and in this bipole arrangement carry a HV transmission voltage of ±200 kV (1260 A). The dc transmission lines 20 and 22 can be connected to any convenient type of onshore supply network or power grid (not shown), optionally by means of a DC/AC converter station.

The first dc terminal of secondary DC/DC converter 60₁ is connected to the first dc line of the dc collection networks N1 and N2. The second dc terminal of secondary DC/DC converter 60₁ is connected to the first dc terminal of secondary DC/DC converter 60₂. The second dc terminal of secondary DC/DC converter 60₁ and the first dc terminal of secondary DC/DC converter 60₂ are connected to the second dc line of dc collection networks N1 and N2. The second dc terminal of secondary DC/DC converter 60₂ is connected to the third dc line of dc collection networks N1 and N2.

Although not shown, the first and second dc terminals of each secondary DC/DC converter 60 can be connected to the dc collection networks N1 and N2 by means of off-load switches or dc circuit breakers to allow the clusters C1 and C2 to be isolated between the dc collection network and the HVDC transmission lines in the event of a fault or for maintenance or repair.

The remaining clusters C3, C4...C14 and their associated interconnected pairs of secondary DC/DC converters are arranged in the same way. Each secondary DC/DC converter 60 is working in parallel and is independent. This particular arrangement is generally preferred for multi-HVDC terminal applications or for the interconnection of several wind farms.

An eighth power collection and transmission system for a 504 MW offshore wind turbine farm will now be described with reference to Figures 13 and 14.

The eighth power collection and transmission system is broadly similar to the first power collection and transmission systems described above, but the dc collection networks N1, N2...N14 are connected into a common dc busbar 100 by dc circuit breakers. A detailed arrangement of the common dc busbar 100 is shown in Figure 14. The first and second dc lines of the first dc collection network N 1 are connected to first and second dc lines a and b of the dc busbar 100 by means of circuit breaker 102 while the first and second dc terminals of the first DC/DC converter module 14₁ in the series are connected to the first and second lines a and b of the dc busbar 100 by means of circuit breaker 104. Each dc collection network and DC/DC converter module are connected to the first and second dc lines a and b of the dc busbar 100 in a similar manner.

The dc busbar 100 is interconnected into a linked busbar or a ring busbar by means of dc circuit breakers 106.

A similar common dc busbar can be used for the alternative dc collection networks and DC/DC converter modules shown in Figures 4 and 5, for example, with the addition of a further dc line.

The various alternative power collection and transmission systems described above may be summarised as follows:

### Clusters:

The system may have any convenient number of clusters C1, C2... Cm, each cluster having any convenient number of wind turbines 2 with associated generators 4 and interposing power converters 6 where appropriate.

### Primary DC/DC converters:

The primary DC/DC converters may be an asymmetric or symmetric type with any suitable topology, power rating etc.

### DC collection networks:

The dc collection networks N1, N2...Nm may be implemented with two or three dc lines (e.g. as two- or three-core cables or an appropriate number of single-core cables) depending on the type of primary DC/DC converter. Each dc collection network receives power from the wind turbines 2 in the associated cluster C1, C2...Cm and is connected to the secondary DC/DC converter, optionally to a dedicated DC/DC converter module.

### Secondary DC/DC converters:

Each secondary DC/DC converter includes a series of DC/DC converter modules 14 that can be interconnected on their dc transmission sides and dc collection network sides in series, parallel, or a combination of both series and parallel, as appropriate.

The DC/DC converter modules 14 may be co-located at a single platform as shown in Figures 1, 2, 4, 5, 10, 12 and 13 to define a converter station arrangement. Alternatively, the DC/DC converter modules 14 may be distributed through the wind turbine farm to define a hub arrangement as shown in Figures 7, 8 and 9.

### Connection between the dc collection network and the secondary DC/DC converter for converter station arrangements:

In the first, second and third systems shown in Figures 1, 4 and 5, respectively, each dc collection network N1, N2...Nm is connected directly to a dedicated DC/DC converter module 14 of the secondary DC/DC converter 12. In the eighth system shown in Figure 13 each dc collection network N1, N2...Nm is connected to a dedicated DC/DC converter module 14 of the secondary DC/DC converter 12 by means of a common dc busbar 100.

In the sixth and seventh systems shown in Figures 10 and 12, respectively, the dc collection networks N1, N2...Nm are connected individually (or in pairs) to dedicated secondary DC/DC converters 60 (or interconnected pairs of secondary DC/DC converters 60₁, 60₂).

### Connection between the dc collection network and the secondary DC/DC converter for hub arrangements:

In the fourth and fifth systems shown in Figure 7 and 9 respectively, each dc collection network N1, N2...Nm is connected directly to a dedicated DC/DC converter module 14 of the secondary DC/DC converter and which is located at one of the wind turbines 2 of the associated cluster C1, C2... Cm.

### DC/DC converter modules:

Each DC/DC converter module includes a series of DC/DC converter units 24 (each consisting of a DC/AC converter block 26, an AC/DC converter block 28 and interposing transformer 30) that can be connected on their dc transmission sides and dc collection network sides in series, parallel, or a combination of both series and parallel, as appropriate.

It will be readily appreciated that the various technical features present in each collection and transmission system can be combined in any appropriate manner depending on design requirements.

## Claims

1. A power collection and transmission system for a plurality of energy devices (2) grouped into two or more clusters (C1, C2...Cm), the power connection and transmission system comprising:
a dc collection network (N1, N2...Nm) for each cluster (C1, C2...Cm);
a primary DC/DC converter (8) located at each energy device (2) and connected to a dc collection network (N1, N2...Nm);
first and second dc transmission lines (20, 22); and
a secondary DC/DC converter (12) connected between the dc collection networks (N1, N2...Nm) and the first and second dc transmission lines (20, 22)

2. A power collection and transmission system according to claim 1, wherein the secondary DC/DC converter (12) includes a series of interconnected DC/DC converter modules (14₁, 14₂...14ₖ).

3. A power collection and transmission system according to claim 2, wherein each DC/DC converter module (14₁, 14₂...14ₖ) has first and second dc terminals (16a, 16b) connected to dc lines of a respective one of the dc collection networks (N1, N2...Nm).

4. A power collection and transmission system according to claim 2, wherein each DC/DC converter module (14₁, 14₂...14ₖ) has first and second dc terminals (16a, 16b) connected to dc lines of a respective one of the dc collection network (N1, N2...Nm) by means of a common dc distribution busbar or switching network.

5. A power collection and transmission system according to claim 1 or claim 2, wherein each dc collection network (N1, N2...Nm) is connected to a separate secondary DC/DC converter (60), the secondary DC/DC converters (60) being connected in parallel to the first and second transmission lines (20, 22).

6. A power collection and transmission system according to any preceding claim, wherein a first DC/DC converter module (14₁) in the series has a third dc terminal (18a₁) connected to the first dc transmission line (20) and a fourth dc terminal (18b₁) that is connected to the third dc terminal (18a₂) of the next DC/DC converter module (14₂) in the series.

7. A power collection and transmission system according to claim 6, wherein each DC/DC converter module (14₁, 14₂...14₍ₖ₋₁₎ apart from the last DC/DC converter module (14ₖ) in the series has a fourth dc terminal (18b₁ 18b₂...18b(ₖ₋₁₎) that is connected to a third dc terminal (18a₂, 18a₃...18aₖ) of the next DC/DC converter module in the series; and
wherein the last DC/DC converter module (14ₖ) in the series has a fourth dc terminal (18bₖ) that is connected to the second dc transmission line (22).

8. A power collection and transmission system according to claim 6 or claim 7, wherein each of the interconnected DC/DC converter modules (14₁, 14₂...14ₖ) includes a series of interconnected DC/DC converter units (24₁, 24₂...24ₚ).

9. A power collection and transmission system according to claim 8, wherein each of the interconnected DC/DC converter units (24₁, 24₂...24ₚ) includes a transformer (30), a DC/AC converter block (26) connected to first transformer windings, and an AC/DC converter block (28) connected to second transformer windings.

10. A power collection and transmission system according to claim 8, wherein the DC/AC converter block (26₁) of the first DC/DC converter unit (24₁) in the series has a first dc terminal (32a₁) connected to a first dc line of the respective one of the dc collection networks (N1, N2...Nm) and a second dc terminal (32b₁) that is connected to the first dc terminal (32a₂) of the DC/AC converter block (26₂) of the next DC/DC converter unit (24₂) in the series.

11. A power collection and transmission system according to claim 10, wherein the DC/AC converter block (26₁, 26₂ ... 26₍ₚ₋₁₎) of each DC/DC converter unit (24₁, 24₂...24₍ₚ₋₁₎ apart from the last DC/DC converter unit (24ₚ) in the series has a second dc terminal (32b₁, 32b₂...32b₍ₚ₋₁₎) that is connected to a first dc terminal (32a₂, 32a₃...32aₚ) of the DC/AC converter block (26₂, 26₂...26ₚ) of the next DC/DC converter unit (24₂, 24₃...24ₚ) in the series; and
wherein the DC/AC converter block (26ₚ) of the last DC/DC converter unit (24ₚ) in the series has a second dc terminal (32bₚ) that is connected to a second dc line of the respective one of the dc collection networks (N1, N2...Nm).

12. A power collection and transmission system according to claim 9, wherein the DC/AC converter block (26₁, 26₂...26ₚ) of each DC/DC converter unit (24₁, 24₂...24ₚ) in the series has a first dc terminal connected to a first dc line (32a₁, 32a₂...32aₚ) of the respective one of the dc collection networks (N1, N2...Nm) and a second terminal (32b₁, 32b_{2.}..32bₚ) that is connected to a second dc line of the same dc collection network (N 1, N2...N14).

13. A power collection and transmission system according to any of claims 9 to 12, wherein the AC/DC converter block (28₁, 28₂...28₍ₚ₋₁₎) of each DC/DC converter unit (24₁, 24₂...24₍ₚ₋₁₎) apart from the last DC/DC converter unit (24ₚ) in the series has a second dc terminal (34b₁, 34b₂...34b₍ₚ₋₁₎) that is connected to a first dc terminal (34a₂, 34a₃...34aₚ) of the AC/DC converter block (28₂, 28₃...28ₚ) of the next DC/DC converter unit (24₂, 24₃, 24ₚ) in the series.

14. A power collection and transmission system according to any of claims 9 to 12, wherein the AC/DC converter block (28₁, 28₂...28ₚ) of each DC/DC converter unit (24₁, 24₂...24ₚ) has a first dc terminal (34a₁, 34a₂...34aₚ) that is connected to the third dc terminal (18a) of the respective DC/DC converter module (14) and a second dc terminal (34b₁, 34b₂...34bₚ) that is connected to the fourth dc terminal 18b of the respective DC/DC converter module (14).

15. A power collection and transmission system according to any preceding claim, wherein the DC/DC converter modules (14) are co-located at a single platform.

16. A power collection and transmission system according to any of claims 1 to 14, wherein each DC/DC converter module (14) is located at a respective one of the energy devices (2).

17. A method of operating a power collection and transmission system according to claim 4 where the common dc distribution busbar or switching network includes switches (102, 104) between each dc collection network (N1, N2...Nm) and its associated DC/DC converter module (14₁, 14₂... 14ₖ) and switches (106) to isolate the dc collection networks (N1, N2...Nm) from each other, wherein the common dc distribution busbar or switching network can be configured to provide at least one of the following modes of operation:
(a) allowing point to point power flow between any or all of the dc collection networks (N1, N2...Nm) and DC/DC converter modules (14₁, 14₂...14ₖ) whilst the dc collection networks (N1, N2...Nm) are isolated from each other;
(b) allowing power flow from at least one dc collection network (N1, N2...Nm) to at least one DC/DC converter module (14₁, 14₂...14ₖ);
(c) allowing power flow between a plurality of dc collection networks (N1, N2...Nm) and a plurality of DC/DC converter modules (14₁, 14₂...14ₖ) while at least one dc collection network is isolated;
(d) allowing power flow between a plurality of dc collection networks (N1, N2...Nm) and a plurality of DC/DC converter modules (14₁, 14₂...14ₖ) while at least one DC/DC converter module is isolated; and
(e) allowing power flow between the dc collection networks (N1, N2...Nm) and their associated DC/DC converter modules (14₁, 14₂...14ₖ) to be electrically connected as a single island or a plurality of galvanically isolated islands.
